# EUROPEAN PATENT APPLICATION

(11) **EP 0 613 131 A2**
(43) Date of publication of application: **31.08.1994**
(21) Application number: 94300684.1
(22) Date of filing: 28.01.1994
(51) Int. Cl.: G11B 15/43, G11B 15/22

(54) **Tape tension control**

(30) Priority: 26.02.1993 KR 932751
(71) Applicant: Samsung Electronics Co., Ltd., Suwon-City, Kyungki-do 441-742 (KR)
(72) Inventor: Choi, Do Young, Suwon-city, Kyungki-do (KR); Cho, Young Ho, Suwon-city, Kyungki-do (KR)
(74) Representative: Stanley, David William

(57) **Abstract**

A device for tension control of a cassette tape recorder includes a slider 32, a tension band holder 30 and a tension arm 42. The slider 32 is resiliently mounted on a guide rod 34 of the tension band holder 30 and the tension arm 42 has a tension pin 44 for rotating under the tension of the travelling tape 26, for being minutely clutched according to the tension of the tape to accurately and minutely control the tension of the tape. The slider 32 and the tension arm 42 are positioned on different decks respectively so as to be suitable for a pocket-sized camcorder.

## Description

The present invention relates to the control of tape tension in, for example, a cassette tape recorder and/or player.

Generally, tape recorders record and reproduce signals to and from a cassette tape by mode conversion after loading the cassette tape on a drum in a deck. The tape is transferred along a certain travelling path on the deck, and a certain tension is applied to the tape, to prevent the transferring status of the tape becoming unstable due to the structural features of the deck.

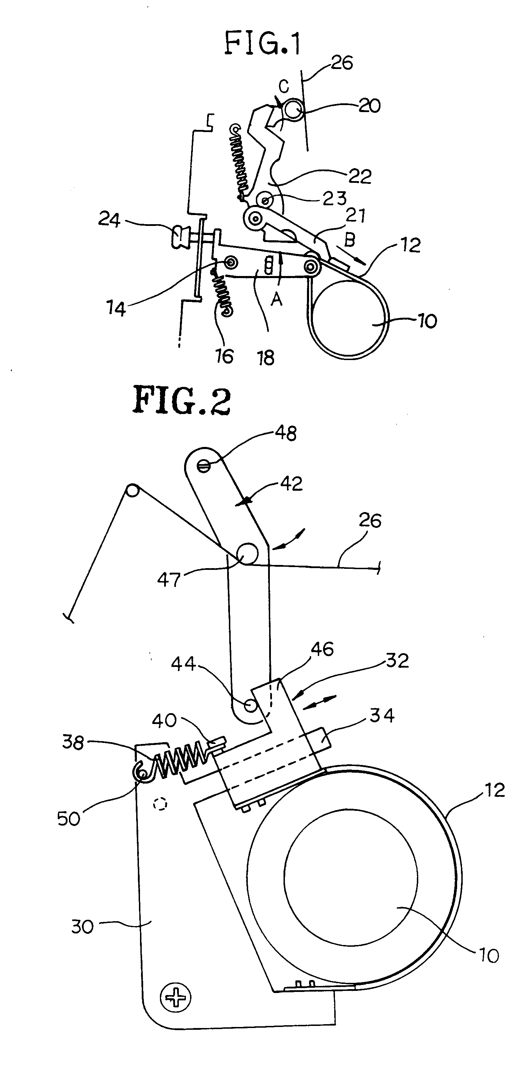

Now, referring to Figure 1 of the accompanying diagrammatic drawings, a conventional device for controlling tape tension is explained in more detail.

A tension belt or band 12 is wound around a supply reel 10. One side of the band 12 contacts a lever 18 arranged to rotate about a hinge 14 under the resilient bias of a spring member 16 elastically mounted on the lever 18, and the other side of the band contacts a lever 21 of a tension arm 22 having a tension pole 20.

A screw member 24 is mounted at one end of the lever 18 so that the lever 18 rotates pivotally around the hinge 14 in response to loosening or fastening the screw member 24, and the tension band 12 passing around the supply reel 10 is tightened or slackened in response to the pivotal movement of the lever 18, thereby to control the rotation of the supply reel 10.

In more detail, if the screw member 24 is loosened, the lever 18 rotates pivotally in direction of an arrow "A" about the hinge 14 due to the resilience of the spring member 16 and the tension band 12 connected with the lever 18 moves upwardly, as seen in Figure 1.

Similarly, the lever 21 connected with the tension arm 22 is pulled in direction of an arrow "B", so that the tension arm 22 rotates pivotally in direction of an arrow "C" about a hinge 23. Therefore, a proper back tension of a tape 26 can be maintained.

However, this conventional device for controlling tape tension has problems in that, since the tension band 12 controls the rotation of the supply reel 10 by means of the lever 18 pivoting on the hinge 14, the difference between a winding angle of the tension band 12 against the supply reel 10 and a reference value increases and it is impossible to control the back tension of the tape stably.

Another problem is that, due to the number and size of the necessary components, the whole size of the product is relatively large. In particular, since the tension band 12 wound around the supply reel 10 is fixed on the tension arm 22 and the lever 18 is maintained in a predetermined position respectively on one deck, such a tension control device cannot be applied to camcorders having a tension arm such as 22 and a supply reel such as 10 or separate decks.

Preferred embodiments of the present invention aim to provide a device for tension control of cassette tape recorder in which a tension arm and an elastically positioned slider are minutely clutched according to the tension of the tape by connecting the slider with one end of a tension band wound around the supply reel and by forming a tension pin on the tension arm for rotating the tension arm by the tension of the travelling tape to move the slider, thereby accurately and minutely controlling the tension of the tape.

Another aim is to provide a device for tension control of a cassette tape recorder which can be easily applied to a camcorder deck of a pocket-size subminiature camera by setting up a pivotally rotatable tension arm having a tension pole rotating according to the back tension of the tape, separately from a tension band holder and a slider connected to the tension band wound around a supply reel, on first and second decks respectively.

According to one aspect of the present invention, there is provided a device for controlling tension of a recording tape, the device comprising:
a tension band holder;
a tension band secured to said holder and adapted to engage a supply reel of a tape recorder; and
a tension arm which is mounted for pivotal movement and carries a tension pole adapted to bear against a recording tape, in use:
wherein:
a slider is mounted for sliding movement on said tension band holder;
a resilient bias means urges said slider in a direction of sliding movement on said tension band holder;
said tension band has one end secured to said tension band holder and another end secured to said slider; and
said tension arm and said slider have interengaging abutment portions so as to transmit movement between said tension arm and said slider.

Preferably, said tension band holder is provided with a guide rod on which said slider is slidably mounted.

Preferably, said slider is formed with a guide hole through which said guide rod passes, and said guide hole and said guide rod are of corresponding polygonal cross-section.

Preferably, said polygonal cross-section is a substantially square cross-section.

Preferably, said tension arm carries a pin which serves as one of said abutment portions.

According to another aspect of the present invention, there is provided, in combination, a tension controlling device according to any of the preceding aspects of the invention, and a tape supply reel, wherein said tension band holder is secured adjacent to said supply reel.

According to a further aspect of the present invention, there is provided, in combination, a tension controlling device according to any of the preceding aspects of the invention, and a deck assembly comprising first and second decks which are moveable relative to one another, wherein said tension arm is mounted on said first deck and said tension band holder and said slider are disposed on said second deck.

The invention extends to a tape recorder and/or player provided with a tension controlling device or a combination according to any of the preceding aspects of the invention.

For a better understanding of the invention, and to show how embodiments of the same may be carried into effect, reference will now be made, by way of example, to Figures 2 to 4 of the accompanying diagrammatic drawings, in which:
Figure 2 is a plan view illustrating a device for controlling tension of a tape in a cassette tape recorder according to the present invention;
Figure 3 is a side view of the device as shown in Figure 2; and
Figures 4A and 4B are respectively a cross-sectional view and a side view illustrating a slider portion of Figure 2.

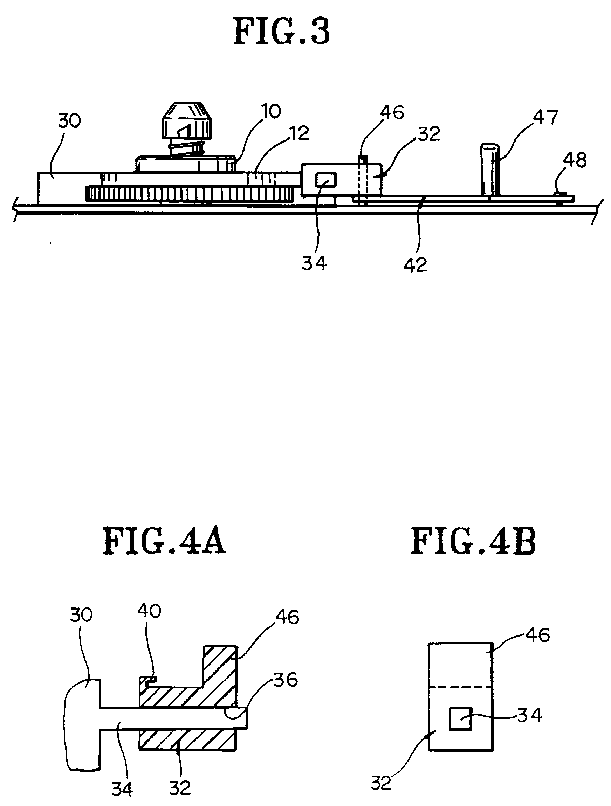

In Figures 2 to 4, a tension band holder 30 is fixed adjacent to a supply reel 10 on a deck for fixing a tension band 12 at one end and has a guide rod 34 on which a slider 32 is mounted.

The slider 32 comprises a guide hole 36 for inserting the guide rod 34 of the tension band holder 30 therethrough, a spring lug 40 for engaging a spring 38 thereon, and a connection projection 46 connected with a tension pin 44 of a tension arm 42. The slider 32 is connected to the tension band 12 wound around the supply reel 10 at its lower end.

The tension arm 42 comprises a tension pole 47 which engages a tape 26 and the tension pin 44 which abuts the connection projection 46 of the slider 32, and the tension arm pivotally rotates about a hinge pin 48 on a deck under the tension of the tape 26.

The spring 38 is connected between a retaining lug 50 on the tension band holder 30 and the spring lug 40 on the slider 32.

The guide rod 34 of the tension band holder 30 and the guide hole 36 of the slider 32 have the same polygonal section, preferably a square or hexagonal shape, to engage with one another.

The tension arm 42 having the tension pole 47 and the tension pin 44 is positioned on a first deck (not illustrated), and the tension band holder 30 mounted adjacent to the supply reel 10 and the supply reel 10 connected to the tension band 12 wound around the supply reel 10 are positioned on a second deck (not illustrated) which is movable independently of the first deck.

According to the device for tension control of a cassette tape recorder as described above, if the tape 26 is loaded on a drum after the cassette tape is mounted on the deck, the tape 26 is transferred along a certain travelling path since the tension pole 47 of the tension arm 42 contacts one side of the tape 26.

At this time, a predetermined tension is applied to the supply reel 10 and the tape 26, since the slider 32 is resiliently positioned on the guide rod 34 of the tension band holder 30 by means of the spring 38, and the tension pin 44 of the tension arm 42 engages on the connection projection 46 of the slider 32.

In this status, if a back tension of the tape 26 is bigger or smaller than a predetermined value, the tension pole 47 of the tension arm 42 is rotatably moved in proportion to the difference, so that the tension pin 44 is rotatably moved by a greater amount.

Since the tension pin 44 of the tension arm 42 abuts the connection projection 46 of the slider 32, the slider 32 is moved along the guide rod 34 of the tension band holder 30.

If the slider 32 is moved, a tension applied to the tension band 12 fixed on the slider 32 is changed and a loading value when the supply reel 10 rotates is changed accordingly, thereby to continuously and minutely control a back tension of the tape 26 in accordance with the value of the rotating load.

Therefore, the tension pin 44 controls the tension of the tension band 12 wound about the supply reel 10 minutely by the tension of the travelling tape 26 so that it becomes possible to prevent the tape 26 from being damaged and for the tape 26 to travel safely.

In this embodiment of the present invention, the device for tension control of a tape recorder can control the supply reel 10 by the tension arm 42 pivotally rotating according to the change of tension of the travelling tape loaded to the drum, and the consequent change of tension of the tension band 12 of which the tension is changed by the tension pin 44 of the tension arm 42.

Further, the device for tension control may be easily applied to a pocket-size camcorder deck of a subminiature camera by locating the tension arm 42, having the tension pole 47 connected with the tape 26 and rotating according to the back tension of the tape 26, on the first deck, separately from the second deck on which is mounted the tension band holder 30 having the tension band wound around the supply reel 10 and the slider 32.

Moreover, it is possible to minimize the device for tension control since the components for the tension band holder 30, the slider 32 and the tension arm 42 decrease in number and size, and their constitution becomes simple.

As explained above, the illustrated device for tension control of a cassette tape recorder has advantages that the resiliently positioned slider and the tension pin of the tension arm rotating under the tension of the travelling tape can be separately mounted on the first and the second decks and connected with each other to move the slider resiliently, so that the tension of the tape can be accurately and minutely controlled as the tension arm and the slider are minutely clutched correspondingly to the tension of the tape and the minimized device can be easily applied to a pocket-sized camcorder deck.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A device for controlling tension of a recording tape, the device comprising:
a tension band holder (30);
a tension band (12) secured to said holder (30) and adapted to engage a supply reel (10) of a tape recorder; and
a tension arm (42) which is mounted for pivotal movement and carries a tension pole (47) adapted to bear against a recording tape (26), in use:
wherein:
a slider (32) is mounted for sliding movement on said tension band holder (30);
a resilient bias means (38) urges said slider in a direction of sliding movement on said tension band holder (30);
said tension band (12) has one end secured to said tension band holder (30) and another end secured to said slider (32); and
said tension arm (42) and said slider (32) have interengaging abutment portions (44,46) so as to transmit movement between said tension arm (42) and said slider (32).

2. A device according to claim 1, wherein said tension band holder (30) is provided with a guide rod (34) on which said slider (32) is slidably mounted.

3. A device according to claim 2, wherein said slider (32) is formed with a guide hole (36) through which said guide rod (34) passes, and said guide hole (36) and said guide rod (34) are of corresponding polygonal cross-section.

4. A device according to claim 3, wherein said polygonal cross-section is a substantially square cross-section.

5. A device according to any of the preceding claims, wherein said tension arm (42) carries a pin (44) which serves as one of said abutment portions (44,46).

6. In combination, a tension controlling device according to any of the preceding claims, and a tape supply reel (10), wherein said tension band holder (30) is secured adjacent to said supply reel (10).

7. In combination, a tension controlling device according to any of preceding claims 1 to 5, and a deck assembly comprising first and second decks which are moveable relative to one another, wherein said tension arm (42) is mounted on said first deck and said tension band holder (30) and said slider (32) are disposed on said second deck.

8. A tape recorder and/or player provided with a tension controlling device or a combination according to any of the preceding claims.
